# EUROPÄISCHE PATENTSCHRIFT

(11) **EP 0 972 682 B1**
(45) Veröffentlichungstag und Bekanntmachung des Hinweises auf die Patenterteilung: **24.09.2003**
(21) Anmeldenummer: 98109550.8
(22) Anmeldetag: 26.05.1998
(51) Int. Cl.: B60R 16/00, B60R 16/02

(54) **Zentralelektrik**
Electrical distribution centre
Centrale de distribution électrique

(43) Veröffentlichungstag der Anmeldung: 19.01.2000
(73) Patentinhaber: Leopold Kostal GmbH & Co. KG, 58507 Lüdenscheid (DE)
(72) Erfinder: Dreiskemper, Heinrich-Wilhelm, 45966 Gladbeck (DE); Schulte, Michael, 57462 Olpe (DE); Hess, Anton-Josef, 58119 Hagen (DE); Werda, Jörg, 58840 Plettenberg (DE)

(56) Entgegenhaltungen:
- EP-A- 0 818 356
- DE-A- 2 821 992
- DE-A- 3 903 818
- DE-C- 4 422 434
- US-A- 5 229 922
- US-A- 5 428 535

## Beschreibung

Die vorliegende Erfindung geht von einer gemäß dem Oberbegriff des Hauptanspruches konzipierten Zentralelektrik aus.

Derartige Zentralelektriken sind dafür vorgesehen, auf einfache Art und Weise an zentraler Stelle einen Knotenpunkt für eine Netzstruktur zu schaffen. Dabei ist eine solche Zentralelektrik üblicherweise einerseits mit mehreren Anschlußstellen zur Aufnahme von Steuergeräten und Sicherungen, sowie andererseits mit mehreren Anschlußstellen für eine Verbindung mit den zur Netzstruktur gehörenden elektrischen Leitungen versehen. Innerhalb einer solchen Zentralelektrik werden die notwendigen Verschaltungen bzw. Verbindungen zwischen den bzw. zu den verschiedenen Potentialen geschaffen, um z.B. die angeschlossenen elektrischen Aggregate der Netzstruktur mit Strom zu versorgen, abzusichern und entsprechend der gewünschten Funktionen über die zugehörigen Steuergeräte in Betrieb zu setzen bzw. abzuschalten.

Durch die DE 28 21 992 A1 ist eine Zentralelektrik für Kraftfahrzeuge bekannt geworden, die an ihrer Oberseite die notwendigen Anschlußstellen für Sicherungen und Steuergeräte sowie an ihrer Unterseite die erforderlichen Anschlußstellen für die verschiedenen Verbindungen mit dem Kraftfahrzeugbordnetz aufweist.
Die Zentralelektrik besteht aus einem Hauptgerät und zwei mit diesem elektrisch und mechanisch kuppelbaren Nebengeräten. Über jeweils eine an den beiden Stirnseiten des Hauptgerätes vorhandene Kupplungsstelle können die beiden Nebengeräte angeschlossen werden. Bei einer solchen Anordnung sind die Kupplungsstellen jedoch unterschiedlich aufgebaut, so daß immer nur das entsprechend zugehörige Nebengerät an eine bestimmte Stirnseite des Hauptgerätes angeschlossen werden kann. Eine modulare und flexible elektrische und mechanische Kupplung von mehreren Nebengeräten an das Hauptgerät ist somit nicht möglich.

Außerdem ist durch die US-PS 5 428 535 eine im wesentlichen dem Oberbegriff des Hauptanspruches entsprechende Zentralelektrik bekannt geworden. Diese ebenfalls für Kraftfahrzeuge bestimmte, ein Gehäuse aufweisende Zentralelektrik ist auch zur zentralen Anordnung von elektrischen/elektronischen Bauelementen, wie z.B. Steuergeräten, Verbindungskupplungen usw. vorgesehen. In dem Gehäuse sind mehrere unterschiedliche Potentiale führende elektrische Leiter auf einer im Gehäuse gehaltenen Leiterplatte angeordnet, die jeweils Anschlußmöglichkeiten für mehrere mit der Netzstruktur des Kraftfahrzeuges in Verbindung stehende elektrische Leitungen aufweisen. Die Zentralelektrik besteht dabei aus einem Hauptgerät und mehreren mechanisch und elektrisch mit demselben kuppelbaren, jeweils zumindest mit einem elektrischen/elektronischen Bauelement, wie z.B. einem Steuergerät versehenen Nebengeräten. Das Hauptgerät weist einen parallel zu seiner Längserstreckung verlaufenden Leiterkanal auf, der zur Aufnahme von unterschiedliche Potentiale führenden elektrischen Leitern vorgesehen ist. Den Leitern sind mehrere Kupplungsstellen zum Anschluß von mehreren Nebengeräten zugeordnet. Außerdem stehen die Nebengeräte mit jeweils einem Steuerleiter in Verbindung, welcher einerseits bis zu den den Nebengeräten zugeordneten Kupplungsstellen und andererseits bis zu einem am Hauptgerät vorhandenen Steckverbindungsteil geführt ist. Problematisch bei einer solchen Zentralelektrik ist, daß den Nebengeräten jeweils eine bestimmte, bei der Konzeption der Zentralelektrik bereits festgelegte Anordnung am Hauptgerät über die zugehörigen Kupplungsstellen vorgegeben ist. Damit sind bei z.B. nachträglichen Erweiterungen keine Zusammenfassungen von bereits vorhandenen Nebengeräten mit neu hinzugekommenen Nebengeräten zu beispielsweise räumlich nebeneinander angeordneten Funktionsgruppen möglich, d.h. ein solcher Aufbau ist relativ unflexibel.

Der vorliegenden Erfindung liegt deshalb die Aufgabe zugrunde, eine Zentralelektrik der eingangs erwähnten Art zu schaffen, dessen Hauptgerät eine elektrische und mechanische Ankupplung von zugehörigen Nebengeräten auf flexible und modulare Art und Weise ermöglicht, so daß jedes zur Kupplung mit dem Hauptgerät vorgesehene Nebengerät einer beliebigen freien Kupplungsstelle zugeordnet werden kann.

Erfindungsgemäß wird die Aufgabe durch im kennzeichnenden Teil des Hauptanspruches angegebenen Merkmale gelöst.
Vorteilhaft bei einem derartigen Aufbau einer solchen Zentralelektrik ist, daß freie Kupplungsstellen je nach Bedarf mit Nebengeräten unterschiedlichster Funktionszuordnung bestückt werden können. Auch zu einem späteren Zeitpunkt können Nebengeräte somit problemlos an das Hauptgerät angekuppelt werden, wenn noch freie Kupplungsstellen zur Verfügung stehen. Bei Schaffung von Nebengeräten mit neuen Funktionszuordnungen lassen sich auch diese - ohne daß das Hauptgerät verändert werden muß - funktionsgerecht an freie Kupplungsstellen ankuppeln. Selbst Nebengeräte, deren Funktionszuordnung zum Zeitpunkt der Schaffung des Hauptgerätes noch nicht gefordert bzw. bekannt waren, können problemlos an eine beliebige freie Kupplungsstelle des Hauptgerätes angeschlossen werden.

Weitere besonders günstige Ausgestaltungen des erfindungsgemäßen Gegenstandes sind in den Unteransprüchen angegeben und werden anhand eines in der Zeichnung dargestellten Ausführungsbeispieles näher erläutert.
Dabei zeigen
- Fig. 1: prinziphaft eine Zentralelektrik in räumlicher Darstellung mit zwei angeschlossenen Nebengeräten
- Fig. 2: eine Zentralelektrik gemäß Fig. 1 in Explosionsdarstellung ohne Nebengeräte in um 180° gedrehter Darstellung
- Fig. 3: Leiter und Steuerleiter in Explosionsdarstellung gemäß Fig. 2
- Fig. 4: prinziphaft ein Nebengerät in räumlicher Explosionsdarstellung sowie zwei zur Netzstruktur gehörige Leitungen.

Wie aus den Zeichnungen hervorgeht, besteht eine solche Zentralelektrik im wesentlichen aus einem Hauptgerät 1 und mehreren mechanisch und elektrisch mit diesem kuppelbaren Nebengeräten 2.

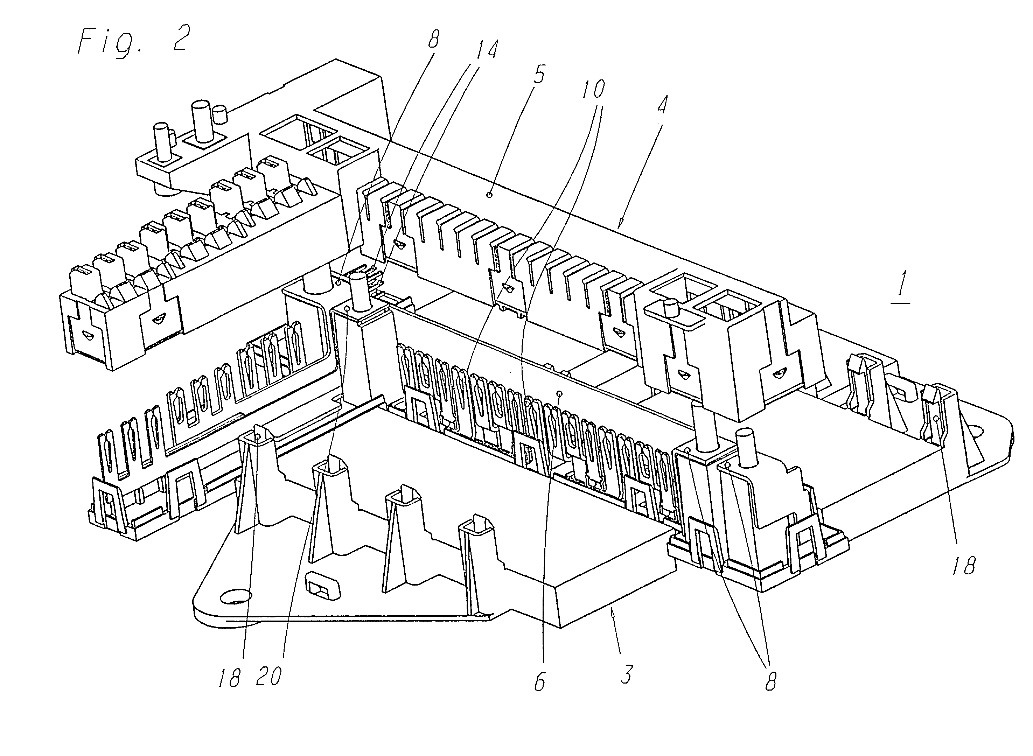

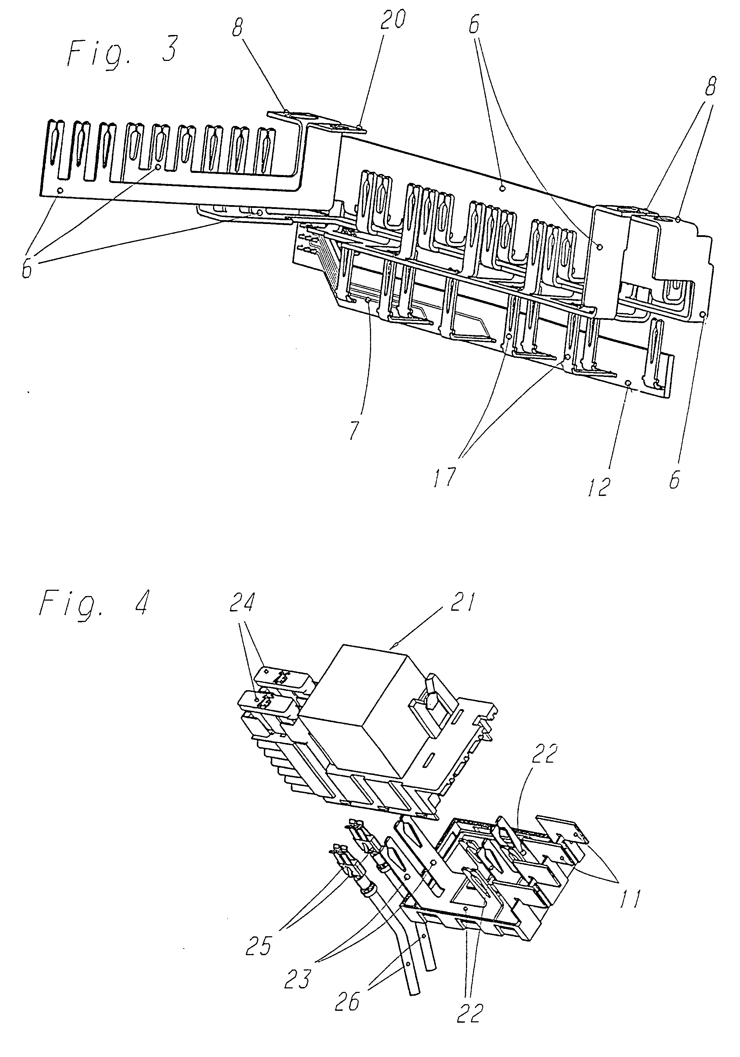

Wie insbesondere aus Fig. 2 und Fig. 3 hervorgeht, weist das Hauptgerät 1 ein aus Kunststoff bestehendes Gehäuseunterteil 3 und ein daran festlegbares, ebenfalls aus Kunststoff bestehendes Gehäuseoberteil 4 auf. Etwa in der Mitte des Hauptgerätes 1 ist ein parallel zu seiner Längserstreckung verlaufender Leiterkanal 5 angeordnet. Innerhalb des Leiterkanales 5 sind drei unterschiedliche Potentiale führende Leiter 6 und neun Steuerleiter 7 untergebracht.

Drei zur Potentialführung vorgesehene elektrische Leiter 6 sind jeweils als aus Kontaktblech hergestellte Stegleiter ausgebildet und im wesentlichen parallel zur Längserstreckung des Hauptgerätes 1 verlaufend im Leiterkanal 5 angeordnet. Zum Einspeisen der drei verschiedenen Potentiale weisen die drei elektrischen Leiter 6 jeweils einerseits einstückig eine Klemmkontaktfläche 8 auf, an die über eine Schraubverbindung eine das entsprechende Potential führende elektrische Leitung angeschlossen werden kann. Andererseits sind die drei elektrischen Leiter 6 an ihren den neun Kupplungsstellen 9 des Hauptgerätes 1 zugeordneten Anschlußbereichen jeweils einstückig mit neun Steckkontakten 10 versehen. Jeder Kuppungsstelle 9 ist also ein Steckkontakt 10 von einem der drei elektrischen Leiter 6 zugeordnet. Bei einem Kraftfahrzeug können die drei elektrischen Leiter 6 z.B. zum Führen der Potentiale: Klemme 30, Klemme 15 und Klemme 31 bzw. Masse vorgesehen sein. Jede der neun für einen Anschluß von Nebengeräten 2 vorgesehenen Kupplungsstellen 9 des Hauptgerätes 1 stellt also eine Abgriffsmöglichkeit der drei im Leiterkanal 5 geführten Potentiale zur Verfügung. Die Kupplungsstellen 9 sind an beiden Längsseiten des Leiterkanales 5 vorhanden, wobei die eine Längsseite vier und die andere Längsseite fünf Kuppungsstellen 9 zum Anschluß von Nebengeräten 2 aufweist.

Die jeweils neun einstückig an jede der drei elektrischen Leiter 6 angeformten Steckkontakte 10 sind zur Aufnahme von flachen Kontaktzungen 11 vorgesehen und als sogenannte Messeraufnahmekontakte ausgebildet. Zum elektrischen Anschluß an das Hauptgerät 1 weisen die Nebengeräte 2 deshalb entsprechend ausgebildete und auf das Rastermaß der Steckkontakte 10 der Kupplungsstellen 9 abgestimmt angeordnete Kontaktzungen 11 auf.

Außerdem ist jeder der neun Kupplungsstellen 9 ein separater Steuerleiter 7 zugeordnet. Die neun Steuerleiter 7 sind als kupferkaschierte Leiterbahnen auf einer einzigen Leiterplatte 12 vorhanden, welche ebenfalls im wesentlichen parallel zur Längserstreckung des Hauptgerätes 1 verlaufend im Leiterkanal 5 angeordnet ist. Zum Anschluß von neun zur Netzstruktur gehörigen Steuerleitungen ist am Leiterkanal 5 des Hauptgerätes 1 ein separater Steckanschluß 13 vorhanden, welcher neun als Steckerstifte 14 ausgebildete Steckkontaktelemente umfaßt. Jeweils ein Steuerleiter 7 ist einerseits an einen Steckerstift 14 des Steckanschlusses 13 angeschlossen und andererseits mit seinem Endbereich bis in eine der neun Kupplungsstellen 9 hineingeführt. Um eine gute und dauerhaft sichere Verbindung für die Nebengeräte 2 zu schaffen, ist die Leiterplatte 12 an den entsprechenden Stellen mit Steckkontaktelementen 17 versehen, die jeweils zur Aufnahme einer entsprechend ausgebildeten Kontaktzunge 11 vorgesehen ist. Das Hauptgerät 1 weist also eine der Anzahl der Kupplungsstellen 9 entsprechende Anzahl von Steuerleitern 7 in seinem Leiterkanal 5 auf, wobei das Hauptgerät 1 neun Kupplungsstellen 9 und dementsprechend auch neun Steuerleiter 7 umfaßt. Weil jeder der neun Kupplungsstellen 9 über ein Steckkontaktelement 17 ein separater Steuerleiter 7 zugeordnet ist, kann eindeutig über ein an die Netzstruktur angeschlossenes, der Einfachheit halber nicht näher beschriebenes Steuergerät festgestellt werden, welche der neun Kupplungsstellen 9 mit einem Nebengerät 2 bestückt ist. Außerdem kann über das Steuergerät auch festgestellt werden, welche Funktionszuordnung dem entsprechenden Nebengerät 2 obliegt.

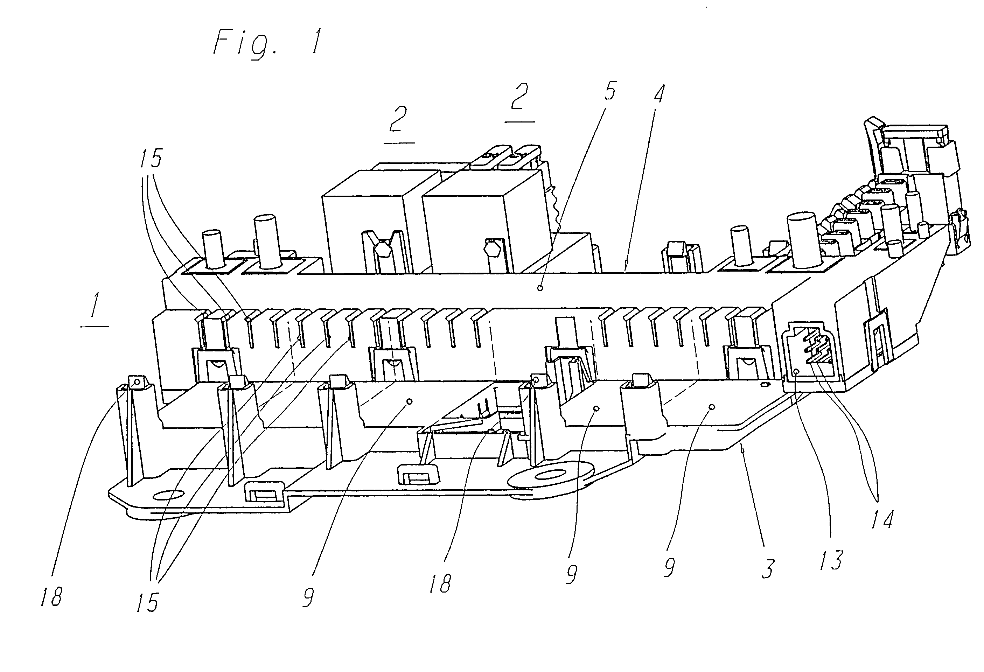

Wie insbesondere aus Fig. 1 hervorgeht, weisen die neun am Leiterkanal 5 vorhandenen Kupplungsstellen 9 zum elektrischen Anschluß der Nebengeräte 2 jeweils ein identisches Steckgesicht auf. Das bedeutet im einzelnen, daß jede Kupplungsstelle 9 in identischem Rastermaß drei Einführöffnungen 15 für Abgriffsmöglichkeiten der die drei verschiedenen Potentiale führenden Leiter 6 und eine Einführöffnung 16 für die Verbindung mit dem zugehörigen Steuerleiter 7 aufweist. Die drei Abgriffsmöglichkeiten für die elektrischen Leiter 6 und die eine Abgriffsmöglichkeit für den Steuerleiter 7 sind bei jeder der neun Kupplungsstellen 9 ein und demselben Platz zugeordnet. Somit besteht die Möglichkeit, die Nebengeräte 2 einer beliebigen freien Kupplungsstelle des Hauptgerätes 1 zuzuordnen. Dies kann auf flexible Art und Weise modular vorgenommen werden, weil alle Kupplungsstellen 9 und alle Nebengeräte 2 kompatibel aufgebaute Kupplungsmöglichkeiten aufweisen. Das bedeutet im einzelnen, daß an den Kupplungsstellen 9 in jedem Fall drei Steckkontakte 10 für die Verbindung mit jeweils einem der drei elektrischen Leiter 6 und ein Steckkontaktelement 17 für die Verbindung mit dem Steuerleiter 7 zur Verfügung steht. Die Nebengeräte 2 weisen dementsprechend je nach Funktionszuordnung eine mit dem Steuerleiter 7 zu verbindende Kontaktzunge 11 und zumindest eine mit einem Leiter 6 zu verbindende Kontaktzunge 11 auf.

Zur mechanischen Festlegung der Nebengeräte 2 weist jede der neun Kupplungsstellen 9 einen einstückig an das Gehäuseunterteil 3 angeformten, federelastisch auslenkbaren Rastarm 18 auf. Zur mechanischen Halterung kommt die Rastnase des Rastarmes 18 mit einem entsprechend ausgebildeten, einstückig an das Gehäuse der Nebengeräte 2 angeformten Rastvorsprung in Verbindung. Die Nebengeräte 2 werden zur Verbindung mit dem Hauptgerät 1 - vom Gehäuseoberteil 4 aus gesehen - senkrecht in Richtung auf das Gehäuseunterteil 3 in die Kupplungsstellen 9 eingeschoben. Dabei findet über die Kontaktzungen 11, die Steckkontakte 10 und die Steckkontaktelemente 17, die elektrische Kupplung sowie gleichzeitig über die Rastarme 18 und die Rastvorsprünge die mechanische Kupplung der Nebengeräte 2 an das Hauptgerät 1 statt.

Zur Schaffung von zusätzlichen Anbindungsstellen, z.B. zum Anschluß für weitere elektrische Leitungen, weist das Hauptgerät 1 einen quer zu seiner Längserstreckung verlaufenden weiteren Leiterkanal 19 auf. Innerhalb des weiteren Leiterkanales 19 sind neun weitere Abgriffsmöglichkeiten für drei als Stegleiter ausgebildete elektrische Leiter 6 geschaffen. Zwei der elektrischen Leiter 6 stehen über Verbindungsstücke einstückig mit den entsprechenden elektrischen Leitern 6 des Leiterkanales 5 in Verbindung, wohingegen einer der Leiter 6 des weiteren Leiterkanals 19 eine separate, für eine Schraubverbindung vorgesehene, weitere Klemmkontaktfläche 20 aufweist. An die weitere Klemmkontaktfläche 20 kann z.B. bei einem Kraftfahrzeug über eine angeschlossene elektrische Leitung das Potential: Klemme 15R eingespeist werden.

Wie insbesondere aus Fig. 4 hervorgeht, weist das Nebengerät 2 an seiner einen Querseite vier Kontaktzungen 11 zur elektrischen Verbindung mit einer Kupplungsstelle 9 des Hauptgerätes 1 auf. Selbstverständlich kann, wie vorstehend bereits beschrieben, ein Nebengerät 2 auch nur zwei oder drei Kontaktzungen 11 zur elektrischen Kupplung aufweisen. An der Oberseite des Nebengerätes 2 ist ein Steuergerät 21 angebracht, welches über vier Kontaktmesser an die Kontaktstege 22 des Nebengerätes 2 angeschlossen ist. Der anderen Querseite des Nebengerätes 2 sind zwei Steckplätze 23 für zwei Sicherungen 24 zugeordnet. Mit einer seiner Steckzungen greift jede der beiden Sicherungen 24 in einen der beiden Steckplätze 23 ein, wohingegen jeweils an die andere Steckzunge jeder Sicherung 24 jeweils eine zur Netzstruktur gehörige elektrische Leitung 26 an das Nebengerät 2 angeschlossen werden kann. Zum Anschluß an eine Sicherung 24 ist jede der elektrischen Leitungen 26 mit einem entsprechenden Stecker 25 versehen. So können auf vorteilhafte Art und Weise zur Netzstruktur gehörige elektrische Aggregate mit Strom versorgt, abgesichert und entsprechend der gewünschten Funktionen angesteuert werden.

## Patentansprüche

1. Zentralelektrik - insbesondere für Kraftfahrzeuge - zur zentralen Anordnung von elektrischen/elektronischen Bauelementen, wie z.B. Sicherungen, Steuergeräte, Verbindungskupplungen, usw., mit einem aus Isolierstoffbestehenden Gehäuse (3,4), in welchem mehrere unterschiedliche Potentiale führende elektrische Leiter (6) angeordnet sind, die jeweils Anschlußmöglichkeiten für mehrere mit einer Netzstruktur verbundene elektrische Leitungen aufweisen, wobei die Zentralelektrik aus einem Hauptgerät (1) und mehreren mechanisch sowie elektrisch mit diesem kuppelbaren, jeweils zumindest mehrere der elektrischen/ elektronischen Bauelemente, wie z.B. Steuergeräte (21) usw. aufweisenden Nebengeräten (2) besteht, wobei das Hauptgerät (1) zumindest einen parallel zu seiner Längserstreckung verlaufenden, zur Aufnahme der elektrischen Leiter (6) vorgesehenen Leiterkanal (5) aufweist, wobei den elektrischen Leitern (6) mehrere, an zumindest einer Längsseite des Leiterkanales (5) vorhandene Kupplungsstellen (9) zum Anschluß von Nebengeräten (2) zugeordnet sind und wobei in dem Leiterkanal (5) des Hauptgerätes (1) zumindest ein den Nebengeräten zugeordneter Steuerleiter (7) vorhanden ist, welcher einerseits bis zu den den Nebengeräten (2) zugehörigen Kuppfungsstellen (9) und andererseits bis zu einem am Hauptgerät (1) vorhandenen Steckverbindungsteil (13) geführt ist, **dadurch gekennzeichnet, daß** die an die Kupplungsstellen (9) anschließbaren, jeweils mit zumindest einer Sicherung (24) versehenen Nebengeräte (2) kompatibel ausgeführt und die mit den Nebengeräten (2) verbindbaren Kupplungsstellen (9) identisch ausgebildet sind und daß die jeweils an eine beliebige Kupplungsstelle (9) anschließbaren Nebengeräte (2) über den jeweils zugehörigen Steuerleiter (7) hinsichtlich ihrer Funktionszuordnung identifizierbar und mit den betreffenden Aggregaten der Netzstruktur verbindbar sind.

2. Zentralelektrik nach Anspruch 1, **dadurch gekennzeichnet, daß** eine der Anzahl der Kupplungsstellen (9) des Hauptgerätes (1) entsprechende Anzahl von Steuerleitern (7) im Leiterkanal (5) geführt sind, wobei einerseits jeder Kupplungsstelle (9) ein separater Steuerleiter (7) zugeordnet ist, welche jeweils andererseits bis zu dem am Leiterkanal (5) des Hauptgerätes (1) vorhandenen separaten Steckverbindungstei (13) geführt sind.

3. Zentralelektrik nach einem der Ansprüche 1 bis 2, **dadurch gekennzeichnet, daß** zumindest einer der im Leiterkanal (5) angeordneten elektrischen Leiter (6) als aus Kontaktblech bestehender Stegleiter ausgebildet ist.

4. Zentralelektrik nach einem der Ansprüche 1 bis 3, **dadurch gekennzeichnet, daß** zumindest einer der im Leiterkanal (5) angeordneten elektrischen Leiter (6) als mit einem Isoliermantel versehenes, flexibles Kabel ausgebildet ist.

5. Zentralelektrik nach einem der Ansprüche 1 bis 4, **dadurch gekennzeichnet, daß** die am Leiterkanal (5) vorhandenen, zum Anschluß von Nebengeräten (2) vorgesehenen Kupplungsstellen (9) als Steckkontaktplätze mit identischem Steckgesicht ausgebildet sind.

6. Zentralelektrik nach einem der Ansprüche 1 bis 4, **dadurch gekennzeichnet, daß** die am Leiterkanal (5) vorhandenen, zum Anschluß von Nebengeräten (2) vorgesehenen Kupplungsstellen (9) als Andruckverbinderplätze mit identischem Anschlußgesicht ausgebildet sind.

7. Zentralelektrik nach einem der Ansprüche 1 bis 4, **dadurch gekennzeichnet, daß** die am Leiterkanal (5) vorhandenen, zum Anschluß von Nebengeräten (2) vorgesehenen Kupplungsstellen (9) als Schneidklemmverbinderplätze mit identischem Anschlußgesicht ausgebildet sind

8. Zentralelektrik nach einem der Ansprüche 1 bis 7, **dadurch gekennzeichnet, daß** jede für den Anschluß von Nebengeräten (2) vorgesehene Kupplungsstelle (9) Abgriffsmöglichkeiten zumindest für alle im Leiterkanal (5) des Hauptgerätes (1) geführten Potentiale aufweist.

9. Zentralelektrik nach einem der Ansprüche 1 bis 8, **dadurch gekennzeichnet, daß** jede für den Anschluß von Nebengeräten (2) vorgesehene Kupplungsstelle (9) zur Festlegung eines Nebengerätes (2) ein mechanisches Halteelement aufweist.

10. Zentralelektrik nach Anspruch 9, **dadurch gekennzeichnet, daß** die mechanischen Halteelemente als einstückig an das Gehäuseunterteil (3) des Hauptgerätes (1) angeformte Rastarme (18) ausgebildet sind.

11. Zentralelektrik nach einem der Ansprüche 1 bis 10, **dadurch gekennzeichnet, daß** jedes Nebengerät (2) Anbindungsmöglichkeiten für zumindest einen Teil der im Hauptgerät (1) geführten Potentiale aufweist.

12. Zentralelektrik nach einem der Ansprüche 1 bis 11, **dadurch gekennzeichnet, daß** an beiden Längsseiten des Leiterkanales (5) mehrere identisch aufgebaute Kupplungsstellen (9) zum Anschluß von Nebengeräten (2) vorhanden sind.

13. Zentralelektrik nach einem der Ansprüche 1 bis 12, **dadurch gekennzeichnet, daß** das Hauptgerät (1) mehr als zwei Leiterkanäle (5) aufweist.

14. Zentralelektrik nach einem der Ansprüche 1 bis 13, **dadurch gekennzeichnet, daß** zumindest eines der einerseits an das Hauptgerät (1) kuppelbaren Nebengeräte (2) andererseits an den Endbereich zumindest einer mit der Netzstruktur in Verbindung stehenden elektrischen Leitung (26) angeschlossen ist.

15. Zentralelektrik nach einem der Ansprüche 1 bis 14, **dadurch gekennzeichnet, daß** das Hauptgerät (1) zur Verwaltung der verschiedenen Kupplungsstellen (9) einen Mikrocomputer aufweist.

16. Zentralelektrik nach einem der Ansprüche 1 bis 15, **dadurch gekennzeichnet, daß** das Hauptgerät (1) zumindest eine Verbindungsanordnung zur elektrischen und mechanischen Kupplung mit einem weiteren Hauptgerät (1) aufweist.

## Claims

1. Central electrical unit - in particular for motor vehicles - for the purpose of providing a central arrangement of electrical/electronic components, such as e.g. fuses, control units, connecting ties, etc., with a housing (3,4) made of insulating material in which several electric conductors (6) carrying various potentials are arranged, each of which features bonding facilities for several electric lines connected to a network configuration; with the central electrical unit comprising a main device (1) and several sub-devices (2) which can be mechanically and electrically coupled to the same, each featuring at least several electrical/ electronic components such as e.g. control units (21); with the main device (1) featuring at least one conductor channel (5) running parallel to its longitudinal extent for the purpose of accommodating the electric conductors (6); with several coupling points (9) for connecting sub-devices (2) provided on at least one longitudinal side of the conductor channel (5) assigned to the electric conductors (6) and with at least one control wire (7) provided in the conductor channel (5) of the main device (1) and assigned to the sub-devices (2), which control wire (7) leads to the coupling points (9) pertaining to the sub-devices (2) at the one end and to a plug-in connecting element (13) at the other end **characterized by** the fact that each of the sub-devices (2) to be connected at the coupling points (9) is provided with at least one fuse (24) and is of a compatible design and the coupling points (9) to be connected to the sub-devices (2) are formed identically and that each of the sub-devices (2) to be connected to any coupling point (9) can be identified as regards its functional assignment by means of the control wire (7) and can be connected to the relevant units in the network configuration.

2. Central electrical unit in accordance with Claim 1, **characterized by** the fact that a number of control wires (7) corresponding to the number of coupling points (9) on the main device (1) are run in the conductor channel (5), with a separate control wire (7) assigned to each coupling point (9) at the one end, each of which is run to the separate plug-in connecting element (13) provided on the conductor channel (5) of the main device (1) at the other end.

3. Central electrical unit in accordance with Claim 1 or Claim 2, **characterized by** the fact that at least one of the electric conductors (6) arranged in the conductor channel (5) is designed as a flat webbed conductor made of terminal strip.

4. Central electrical unit in accordance with any of Claims 1 to 3, **characterized by** the fact that at least one of the electric conductors (6) arranged in the conductor channel (5) is designed as a flexible cable provided with an insulating sheath.

5. Central electrical unit in accordance with any of Claims 1 to 4, **characterized by** the fact that the coupling points (9) provided on the conductor channel (5) for the purpose of terminating sub-devices (2) are designed as plug-in contacting points with an identical plug face.

6. Central electrical unit in accordance with any of Claims 1 to 4, **characterized by** the fact that the coupling points (9) provided on the conductor channel (5) for the purpose of connecting sub-devices (2) are designed as press-on connector points with an identical connecting face.

7. Central electrical unit in accordance with any of Claims 1 to 4, **characterized by** the fact that the coupling points (9) provided on the conductor channel (5) for the purpose of connecting sub-devices (2) are designed as insulation displacement connectors with an identical connecting face.

8. Central electrical unit in accordance with any of Claims 1 to 7, **characterized by** the fact that each of the coupling points (9) provided for connecting sub-devices (2) features tapping facilities for at least all the potentials carried in the conductor channel (5) of the main device (1).

9. Central electrical unit in accordance with any of Claims 1 to 8, **characterized by** the fact that each of the coupling points (9) provided for connecting sub-devices (2) features a mechanical retaining element for the purpose of securing a sub-device (2).

10. Central electrical unit in accordance with Claim 9, **characterized by** the fact that the mechanical retaining elements are designed as engaging arms (18) moulded in one piece onto the bottom housing element (3) of the main device (1).

11. Central electrical unit in accordance with any of Claims 1 to 10, **characterized by** the fact that each sub-device (2) features tapping facilities for at least part of the potentials carried in the main device (1).

12. Central electrical unit in accordance with any of Claims 1 to 11, **characterized by** the fact that several identically structured coupling points (9) are provided on both longitudinal faces of the conductor channel (5) for the purpose of terminating sub-devices (2).

13. Central electrical unit in accordance with any of Claims 1 to 12, **characterized by** the fact that the main device (1) has more than two conductor channels (5).

14. Central electrical unit in accordance with any of Claims 1 to 13, **characterized by** the fact that at least one of the sub-devices (2) which can be coupled to the main device (1) at the one end is connected at the other endto the end section of at least one electric line (26) which is linked to the network configuration.

15. Central electrical unit in accordance with any of Claims 1 to 14, **characterized by** the fact that the main device (1) features a microcomputer for the management of the various coupling points (9).

16. Central electrical unit in accordance with any of Claims 1 to 15, **characterized by** the fact that the main device (1) features at least one connection arrangement to facilitate the electrical and mechanical coupling with a further main device (1).

## Revendications

1. Centrale de distribution électrique - notamment pour véhicules automobiles - pour la disposition centrale de composants électriques / électroniques, comme, par exemple, fusibles, appareils de commande, connexions etc., avec un boîtier (3, 4) en matière isolante, dans lequel plusieurs conducteurs électriques (6) à des potentiels différents sont disposés, lesquels présentent, chacun, des possibilités de raccordement pour plusieurs lignes électriques, reliées à une structure en réseau, la centrale de distribution électrique étant composée d'un appareil principal (1) et de plusieurs appareils auxiliaires (2) pouvant être couplés avec ce dernier mécaniquement ainsi qu'électriquement et présentant chacun au moins plusieurs des éléments électriques / électroniques, comme, par exemple, appareils de commande (21) etc., l'appareil principal (1) présentant au moins une canalisation pour conducteurs (5), qui est disposée parallèlement à son étendue longitudinale et est prévue pour recevoir les conducteurs électriques (6), des points de couplage (9) prévus, au moins sur un côté longitudinal de la canalisation pour conducteurs (5) pour le raccordement d'appareils auxiliaires (2), étant coordonnés aux conducteurs électriques (6) et un conducteur de commande (7) au moins, coordonné aux appareils (2) étant présent dans la canalisation pour conducteurs (5) de l'appareil principal (1), lequel conducteur de commande (7) est mené, d'une part, jusqu'aux points de couplage (9) associés aux appareils auxiliaires (2) et, d'autre part, jusqu'à une pièce de connexion à fiches (13) qui équipe l'appareil principal (1), **caractérisée en ce que** les appareils auxiliaires (2) raccordables aux points de couplage (9) et pourvus, chacun, d'au moins un fusible (24) sont compatibles et que les points de couplage (9), pouvant être reliés aux appareils auxiliaires (2), étant de conception identique, et que les appareils auxiliaires (2), pouvant être raccordés, chacun, à un point de couplage quelconque (9) peuvent être identifiés quant à leur affectation fonctionnelle, par l'intermédiaire du conducteur de commande (7) respectif et peuvent être reliés aux groupes concernés de la structure en réseau.

2. Centrale de distribution électrique selon la revendication 1, **caractérisée en ce qu'**un nombre de conducteurs de commande (7) correspondant au nombre des points de couplage (9) de l'appareil principal (1) est conduit dans la canalisation pour conducteurs (5), lesdits conducteurs de commande (7) étant, d'une part, coordonné, individuellement, à chaque point de couplage (9), et, d'autre part, conduits jusqu'à la pièce de connexion à fiches (13) séparée, qui équipe la canalisation pour conducteurs (5) de l'appareil principal (1).

3. Centrale de distribution électrique selon l'une des revendications 1 et 2, **caractérisée en ce qu'**au moins l'un des conducteurs électriques (6), disposés dans la canalisation pour conducteurs (5), est conçu en tant que conducteur de connexion en tôle de contact.

4. Centrale de distribution électrique selon l'une des revendications 1 à 3, **caractérisée en ce qu'**au moins l'un des conducteurs électriques (6), disposés dans la canalisation pour conducteurs (5), est conçu en tant que câble flexible, pourvu d'une gaine isolante.

5. Centrale de distribution électrique selon l'une des revendications 1 à 4, **caractérisée en ce que** les points de couplage (9), prévus sur la canalisation pour conducteurs (5) pour le raccordement d'appareils auxiliaires (2) sont conçus en tant qu'emplacements de contact à fiches, avec face de raccordement identique.

6. Centrale de distribution électrique selon l'une des revendications 1 à 4, **caractérisée en ce que** les points de couplage (9), prévus sur la canalisation pour conducteurs (5) pour le raccordement d'appareils auxiliaires (2), sont conçus en tant qu'emplacements de connexion par pression avec face de raccordement identique.

7. Centrale de distribution électrique selon l'une des revendications 1 à 4, **caractérisée en ce que** les points de couplage (9), prévus sur la canalisation pour conducteurs (5) pour le raccordement d'appareils auxiliaires (2), sont conçus en tant qu'emplacements de connexion de raccord à borne guillotine avec face de raccordement identique.

8. Centrale de distribution électrique selon l'une des revendications 1 à 7, **caractérisée en ce que** chacun des points de couplage (9), prévus sur la canalisation pour conducteurs (5) pour le raccordement d'appareils auxiliaires (2) présente des possibilités de branchement, au moins pour tous les potentiels conduits dans le canal des conducteurs (5) de l'appareil principal (1).

9. Centrale de distribution électrique selon l'une des revendications 1 à 8, **caractérisée en ce que** chacun des points de couplage (9), prévus sur la canalisation pour conducteurs (5) pour le raccordement d'appareils auxiliaires (2), présente un élément de retenue mécanique pour le fixation d'un appareil auxiliaire (2).

10. Centrale de distribution électrique selon la revendication 9, **caractérisée en ce que** les éléments d'arrêt mécaniques sont conçus en tant que bras d'enclenchement (18), formés d'une pièce à partir de la partie inférieure (3) du boîtier de l'appareil principal (1).

11. Centrale de distribution électrique selon l'une des revendications 1 à 10, **caractérisée en ce que** chaque appareil auxiliaire (2) présente des possibilité de liaison pour, au moins, une partie du potentiel mené à l'appareil principal (1).

12. Centrale de distribution électrique selon l'une des revendications 1 à 11, **caractérisée en ce que**, sur les deux côtés longitudinaux de la canalisation pour conducteurs (5), plusieurs points de couplage (9) de structure identique sont prévus pour le raccordement d'appareils auxiliaires (2).

13. Centrale de distribution électrique selon l'une des revendications 1 à 12, **caractérisée en ce que** l'appareil principal (1) présente plus de deux canaux de conducteurs (5).

14. Centrale de distribution électrique selon l'une des revendications 1 à 13, **caractérisée en ce qu'**au moins l'un des appareils auxiliaires (3), pouvant être couplés, d'une part, avec l'appareil principal (1) et, d'autre part, avec l'extrémité d'au moins une ligne électrique (26) reliée à la structure en réseau, est raccordé.

15. Centrale de distribution électrique selon l'une des revendications 1 à 14, **caractérisée en ce que** l'appareil principal (1) présente un microprocesseur pour la gestion des différents points de couplage (9).

16. Centrale de distribution électrique selon l'une des revendications 1 à 15, **caractérisée en ce que** l'appareil principal (1) présente au moins un arrangement de raccordement pour le couplage électrique et mécanique avec un autre appareil principal (1).
